# EUROPEAN PATENT SPECIFICATION

(11) **EP 1 708 521 B1**
(45) Date of publication and mention of the grant of the patent: **25.08.2010**
(21) Application number: 06005950.8
(22) Date of filing: 23.03.2006
(51) Int. Cl.: H04W 88/02

(54) **Automatic time setting method for mobile terminal**
Verfahren zur automatischen Zeiteinstellung für ein Mobilendgerät
Procédé de mise à l'heure automatique pour un terminal mobile

(30) Priority: 29.03.2005 KR 20050026220
(43) Date of publication of application: 04.10.2006
(73) Proprietor: LG Electronics Inc., Youngdungpo-gu Seoul (KR)
(72) Inventor: Kim, Mi-Kyung, Seoul (KR)
(74) Representative: TER MEER - STEINMEISTER & PARTNER GbR

(56) References cited:
- GB-A- 2 362 787
- US-A- 5 655 218
- US-A1- 2004 072 595
- US-B1- 6 539 493

## Description

### BACKGROUND OF THE INVENTION

### 1. Field of the Invention

The present invention relates to a mobile terminal, and more particularly, to a method for automatically setting time in a mobile terminal, whereby the mobile communication terminal can automatically set time in an asynchronous mobile communication system.

### 2. Description of the Related Art

In general, mobile communication is classified into synchronous mobile communication, which adopts a global positioning system (GPS) and is mostly used in North America, and asynchronous mobile communication, which does not adopt the GPS and is mostly used in Europe. Presently, the representative synchronous mobile communication system is code division multiple access 2000 (CDMA2000) and the representative asynchronous mobile communication systems are general packet radio services (GPRS) and global system for mobile communications (GSM).

Although a user does not input time to a mobile terminal in a synchronous mobile communication system, such as CDMA2000, when the mobile terminal is powered on, the mobile terminal performs a terminal resetting process for synchronization with the system (base station) to automatically adjust the time. In this way, all mobile terminals can always maintain the precise time.

However, unlike a mobile terminal used in a synchronous mobile communication system, a mobile terminal used in an asynchronous mobile communication system, such as GSM or GPRS, is not provided with time information from the system. Therefore, users of mobile terminals in asynchronous mobile communication systems must input time to the mobile terminals manually.

Therefore, there is a need for a method to automatically set time in a mobile terminal uses in an asynchronous mobile communication system. The present invention addresses these and other needs.

### SUMMARY OF THE INVENTION

Features and advantages of the invention will be set forth in the description which follows, and, in part, will be apparent from the description or may be learned by practice of the invention. The objectives and other advantages of the invention will be realized and attained by the structure particularly pointed out in the written description and claims hereof as well as the appended drawings.

The invention is directed to provide a method for automatically setting time in a mobile terminal, whereby the mobile communication terminal can automatically set time in an asynchronous mobile communication system. By providing a message to the mobile terminal that includes time information, the mobile terminal may automatically set the time rather than a user having to manually enter time.

The object is solved by a method including the features of the independent claim.

It is contemplated that the method further includes receiving the SMS message from a short message service center of a mobile communication system. Preferably, the method further includes determining that a transport protocol user data header indicator in the SMS message has a value of '1'.

It is contemplated that the method further includes extracting the time information from an information element of a user data header in the SMS message. Preferably, the method further includes extracting the time information from an information element having an information element identifier in the range of 0*EO to 0*FF.

It is contemplated that the method further includes determining whether the SMS message includes the time information, the determination performed according to the information element identifier. It is further contemplated that the method includes extracting the time information and setting the time only if it is determined that the SMS message includes the time information. Preferably, the method further includes deleting the SMS message after setting the time without indicating reception of the SMS message to a user.

GB 2 362 787 A describes a method for setting a time on the cellular phone, wherein the terminal sends a SMS text message addressed to itself, which is subsequently received by the network, time-date stamped and sent back. The terminal sets the time based on the received time-and-date stamped short message.

US 6,539,493 B1 describes a method of updating a system time of a data processor system, wherein the subscriber station of a data processor system communicates a message containing an own address of the subscriber station as the destination address. Upon receipt of this message, time related information is parsed and transferred into the memory of the data processor system.

It is contemplated that the method further includes receiving the time information from a short message service center. Preferably, receiving the time information includes receiving an SMS message to which the time information has been added.

It is contemplated that the method further includes determining that a transport protocol user data header indicator of the SMS message has a value of '1'. Preferably, the method further includes extracting the time information from an information element of a user data header in the SMS message.

It is contemplated that the method further includes extracting the time information from an information element having an information element identifier in the range of 0*E0 to 0*FF. It is further contemplated that the method further includes determining whether the SMS message includes the requested time information, the determination performed according to the information element identifier. Preferably, the method further includes extracting the time information only if it is determined that the SMS message includes the requested the time information.

It is contemplated that the method further includes setting a transport protocol user data header of the SMS message to a value at '1'. Preferably, the method further includes including the requested time information in an information element of a user data header of the SMS message.

It is contemplated that the information element has a data length of 6 octets and includes 6 bytes of information element data containing the requested time. It is further contemplated that the information element data includes information of year, month, day, hour, minute and second in each octet for a total 6 bytes. Preferably, the method further includes including the requested time information in an information element having an information element identifier in the range of 0*E0 to 0*FF.

Additional features and advantages of the invention will be set forth in the description which follows, and, in part, will be apparent from the description or may be learned by practice of the invention. It is to be understood that both the foregoing general description and the following detailed description of the present invention are exemplary and explanatory and are intended to provide further explanation of the invention as claimed. These and other embodiments will also become readily apparent to those skilled in the art from the following detailed description of the embodiments having reference to the attached figures, the invention not being limited to any particular embodiments disclosed.

### BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention. Features, elements, and aspects of the invention that are referenced by the same numerals in different figures represent the same, equivalent, or similar features, elements, or aspects in accordance with one or more embodiments.
Fig. 1 is a flowchart showing sequential steps of a method for automatically setting time for a mobile terminal in accordance with one embodiment of the present invention.
Fig. 2 illustrates a detailed structure of an SMS message for a method for automatically setting time for a mobile terminal in accordance with one embodiment of the present invention.

### DETAILED DESCRIPTION OF THE PREFERRED EMBODIMENTS

The present invention relates to method for automatically setting time in a mobile terminal, whereby the mobile communication terminal can automatically set time in an asynchronous mobile communication system. Although the present invention is illustrated with respect to a mobile communication device, it is contemplated that the present invention may be utilized anytime it is desired to allow a communication device to automatically set time.

Reference will now be made in detail to the preferred embodiments of the present invention, examples of which are illustrated in the accompanying drawings. Well-known functions or constructions are not described in detail since they would obscure the invention with unnecessary detail.

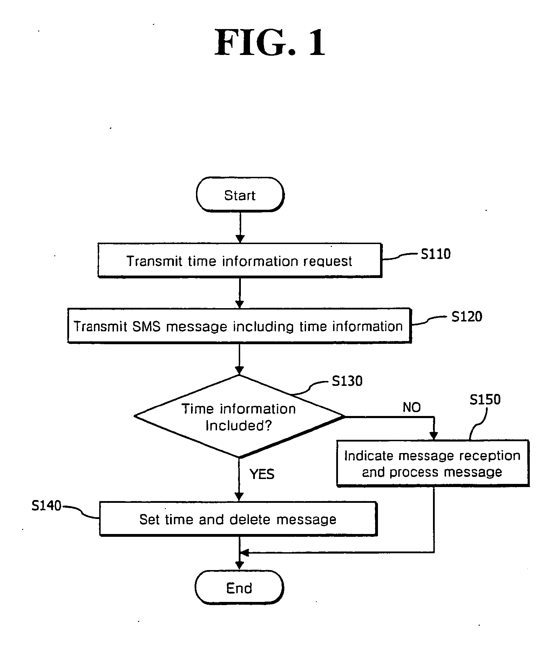

Fig. 1 is a flowchart illustrating sequential steps of a method for automatically setting time for a mobile terminal in accordance with one embodiment of the present invention. Referring to Fig. 1, when the mobile terminal is powered on, the mobile terminal transmits a time information request to a system using a predefined address (S110). The system can be a short message service center (SMSC) that transmits a short message service (SMS) message.

The SMSC, upon receiving the time information request from the mobile terminal, recognizes that the mobile terminal desires to receive time information on the basis of the address, creates an SMS message including time information and transmits the SMS message to the mobile terminal (S120). The mobile terminal, upon receiving the SMS message, determines whether the SMS includes the requested time information or is a general message by parsing the message (S130).

If the message includes the time information, the mobile terminal sets time by using the time information data and deletes the message without indicating to the user that the message was received (S140). If the message is a general SMS message, the mobile terminal indicates to the user that the message was received and displays the message on a screen, deletes the message or stores the message according to a command from the user (S150).

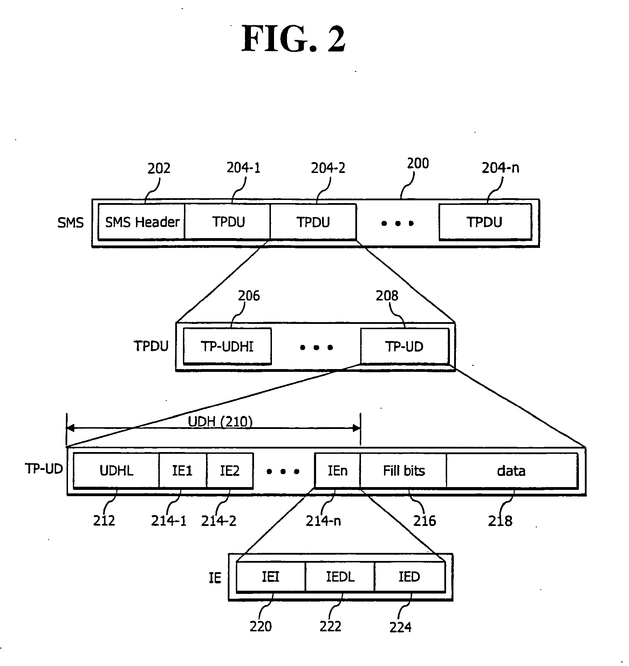

In order to support the method illustrated in FIG. 1, the SMS message must contain a specific structure so that the time information can be added to the SMS message and the mobile terminal can parse the message. The specific structure of the SMS message will be explained with reference to Fig. 2.

Fig. 2 illustrates a detailed structure of an SMS message to support a method for automatically setting time for a mobile terminal in accordance with one embodiment of the present invention. Pursuant to the SMS specification, the SMSC transmits the SMS message to the mobile terminal using an SMS_DELIVER transaction type.

As illustrated in Fig. 2, the SMS message 200 includes an SMS header 202 having message information and a plurality of transport protocol data units (TPDU) 204-1 to 204-n. Each TPDU 204-1 to 204-n includes various fields. A transport protocol user data header indicator (TP-UDHI) 206 indicates transport protocol user data (TP-UD) 208 in the form of information element identifiers (IEI).

When the TP-UDHI 206 has a value of '1', part of the TP-UD 208 including actual message contents is regarded as a user data header (UDH) 210, thereby enabling the mobile terminal to recognize the existence of other information and to parse the message. The TP-UD 208 includes the UDH 210, fill bits 216 and data 218. The UDH 210 includes a UDH length (UDHL) 212 indicating a length of the UDH 210, a plurality of information elements (IE) 214-1 to 214-n.

In accordance with the present invention, the SMSC transmits the time information to the mobile terminal using the IEs 214-1 to 214-n of the UDH 210, which include other information, rather than the actual contents of the SMS message. The mobile terminal receives the time information and automatically sets the time.

The SMSC, upon receiving the time information request from the mobile terminal, transmits the SMS message 200 after setting the TP-UDHI 206 as '1' and adding the time information to the IEs 214-1 to 214-n. According to the SMS specification, the IEI 220 of the IE structure 214-1 to 214-n ranges from 0*.00 to 0*FF. Furthermore, the range of 0*E0 to 0*FF of the IEI 220 is reserved for future use. In the present invention, one value in the range of 0*E0 to 0*FF of the IEI 220 is defined and used to indicate the time information to the user.

Additionally, the SMSC generates the SMS message 200 having an IE data length (IEDL) 222 of 0*06 containing 6 octets and an IE data (IED) 224 including information indicating year, month, day, hour, minute and second in each octet, for a total 6 bytes. The SMSC transmits the SMS message 200 to the mobile terminal that transmitted the time information request. The mobile terminal, upon receiving the SMS message 200, determines whether the message 200 includes the requested time information data on the basis of the IEI 220 when the message 200 is parsed.

If the message 200 includes the requested time information data, the mobile terminal extracts the data including the time information of 6 bytes indicating year, month, day, hour, minute and second from the IED 224 corresponding to 6-octet IEDL 222 and stores the extracted data in a temporary memory. The mobile terminal sets the time using the stored time information data and deletes the message 200 after setting the time without indicating reception of the message 200 to the user.

On the other hand, if the received message does not include the requested time information data, but is a general SMS message, such as in the conventional method, the mobile terminal indicates reception of the message to the user. The mobile terminal then displays the message on a screen, deletes the message or stores the message according to a command from the user.

For example, if 0*E1 is defined as a time information notifying value, the SMSC generates an SMS message in which the IEI of the IE is 0*E1 (IEI=0*E1), the IEDL is 0*06 having 6 octets (IEDL=0*06) and the IED includes information indicating year, month, day, hour, minute and second in each octet, for a total 6 bytes. The SMSC then transmits the SMS message to the mobile terminal that transmitted the time information request.

The mobile terminal receiving the SMS message recognizes that the message includes the requested time information data on the basis of the IEI (0*E1) when the message is parsed, extracts most of the 6 bytes of data including the time information indicating year, month, day, hour, minute and second from the IED corresponding to 6-octet IEDL 222, and stores the extracted data in a temporary memory. The mobile terminal sets the time using the stored time information data and deletes the message after setting the time without indicating reception of the message to the user.

The method for automatically setting time for a mobile terminal according to the present invention can automatically set time in a mobile terminal in an asynchronous mobile communication system. By automatically setting the time, a user is not required to manually input time and convenience is increased.

As the present invention may be embodied in several forms without departing from the spirit or essential characteristics thereof, it should also be understood that the above-described embodiments are not limited by any of the details of the foregoing description, unless otherwise specified, but rather should be construed broadly within its spirit and scope as defmed in the appended claims, and therefore all changes and modifications that fall within the metes and bounds of the claims, or equivalence of such metes and bounds are therefore intended to be embraced by the appended claims. Therefore, all changes and modifications that fall within the metes and bounds of the claims, or equivalence of such metes and bounds are therefore contemplated by the appended claims.

The foregoing embodiments and advantages are merely exemplary and are not to be construed as limiting the present invention. The present teaching can be readily applied to other types of apparatuses. The description of the present invention is intended to be illustrative, and not to limit the scope of the claims. Many alternatives, modifications, and variations will be apparent to those skilled in the art. In the claims, means-plus-function clauses are intended to cover the structure described herein as performing the recited function and not only structural equivalents but also equivalent structures.

## Claims

1. A method for setting time in a mobile terminal, the method comprising:
receiving an SMS message comprising time information from a short message service center of a mobile communication system; and
setting (S140) the time according to the time information, wherein setting the time comprises:
determining whether the SMS message includes the time information:
setting the time only if it is determined that the SMS message includes the time information deleting the message indicating reception of the SMS message to a user: and
indicating reception of the SMS message to a user if it is not determined that the SMS message includes the time information.

2. The method of claim 1, further comprising:
determining that a transport protocol user data header indicator in the SMS message has a value of '1'.

3. The method of claim 1, further comprising:
extracting the time information from an information element of a user data header in the SMS message.

4. The method of claim 3, further comprising:
extracting the time information from an information element having an information element identifier in the range of 0*E0 to 0*FF.

## Patentansprüche

1. Verfahren zum Einstellen der Zeit in einem mobilen Endgerät, wobei das Verfahren umfasst:
Empfangen einer SMS-Nachricht, die Zeitinformationen enthält, von einer Kurznachrichtdienst-Zentrale eines Mobilkommunikationssystems; und
Einstellen (S 140) der Zeit in Übereinstimmung mit den Zeitinformationen, wobei das Einstellen der Zeit umfasst:
Feststellen, ob die SMS-Nachricht die Zeitinformationen enthält;
Einstellen der Zeit nur dann, wenn festgestellt wird, dass die SMS-Nachricht die Zeitinformationen enthält, und Löschen der SMS-Nachricht ohne Anzeige des Empfangs der SMS-Nachricht für einen Anwender; und
Anzeigen des Empfangs der SMS-Nachricht für einen Anwender, falls nicht festgestellt wird, dass die SMS-Nachricht die Zeitinformationen enthält.

2. Verfahren nach Anspruch 1, das ferner umfasst:
Bestimmen, dass ein Transportprotokoll-Anwenderdatenkopfsatz-Indikator in der SMS-Nachricht den Wert "1" hat.

3. Verfahren nach Anspruch 1, das ferner umfasst:
Extrahieren der Zeitinformationen aus einem Informationselement eines Anwenderdatenkopfsatzes in der SMS-Nachricht.

4. Verfahren nach Anspruch 3, das ferner umfasst:
Extrahieren der Zeitinformationen aus einem Informationselement, das einen Informationselement-Identifizierer im Bereich von 0*E0 bis 0*FF hat.

## Revendications

1. Procédé de mise à l'heure d'un terminal mobile, le procédé comprenant :
la réception d'un minimessage comprenant des informations horaires depuis un centre de service de minimessages d'un système de communication mobile ; et
la mise à l'heure (S 140) en fonction des informations horaires, dans lequel la mise à l'heure comprend :
la détermination du fait que le minimessage comporte les informations horaires ;
la mise à l'heure seulement si l'on a déterminé que le minimessage comporte les informations horaires et la suppression du minimessage sans indication de la réception du minimessage à un utilisateur ; et
l'indication de la réception du minimessage à un utilisateur si l'on n'a pas déterminé que le minimessage comporte les informations horaires.

2. Procédé selon la revendication 1, comprenant en outre :
la détermination du fait qu'un indicateur d'en-tête de données d'utilisateur de protocole de transport dans le minimessage a une valeur de 1.

3. Procédé selon la revendication 1, comprenant en outre :
l'extraction des informations horaires d'un élément d'information d'un en-tête de données d'utilisateur dans le minimessage.

4. Procédé selon la revendication 3, comprenant en outre :
l'extraction des informations horaires d'un élément d'information comportant un identifiant d'élément d'information situé dans la plage comprise entre 0*E0 et 0*FF.
